# EUROPÄISCHE PATENTSCHRIFT

(11) **EP 0 931 000 B1**
(45) Veröffentlichungstag und Bekanntmachung des Hinweises auf die Patenterteilung: **02.08.2000**
(21) Anmeldenummer: 97911162.2
(22) Anmeldetag: 30.09.1997
(51) Int. Cl.: B65D 21/02, B65D 67/02

(54) **VERBINDUNGSELEMENT UND GEGENSTAND MIT EINEM INTEGRIERTEN VERBINDUNGSELEMENT**
ASSEMBLY COMPONENT AND OBJECT WITH INTEGRATED ASSEMBLY COMPONENT
ELEMENT D'ASSEMBLAGE ET OBJET A ELEMENT D'ASSEMBLAGE INTEGRE

(30) Priorität: 01.10.1996 DE 19640621
(43) Veröffentlichungstag der Anmeldung: 28.07.1999
(73) Patentinhaber: NUTTO, Uwe, 79100 Freiburg (DE)
(72) Erfinder: NUTTO, Uwe, 79100 Freiburg (DE)
(74) Vertreter: Schmitt, Hans, Dipl.-Ing.
(86) Internationale Anmeldenummer: EP9705363
(87) Internationale Veröffentlichungsnummer: WO9814381

(56) Entgegenhaltungen:
- WO-A-93/24797
- DE-A- 2 525 169
- DE-A- 19 531 836
- DE-U- 29 604 228

## Beschreibung

Die Erfindung betrifft ein Verbindungselement zur lösbaren Verbindung von zwei Gegenständen miteinander, mit einem Grundkörper, an dem ein im wesentlichen L-förmiger Haken mit einem Hakenbogen und einem im wesentlichen parallel zum Grundkörper verlaufenden Hakenkörper vorgesehen ist.

Solche Verbindungselemente werden allgemein für eine Vielzahl von Anwendungen verwendet. Als Beispiel der einfachsten Ausgestaltung kann man beispielsweise Handtuchhalter nennen, die einen Grundkörper aufweisen, der mit seiner Rückseite beispielsweise an eine Wand aufgeklebt wird oder der mit Hilfe einer durch eine durch den Grundkörper führende Bohrung gesteckten Schraube an der Wand befestigt ist.

Siehe als Beispiel DE-U-296 04 228

Ein solches Verbindungselement wird auch zum Einhängen von Behältern wie Fahrradtaschen oder Getränkekisten benutzt und ist aus der Patentanmeldung DE-A-195 31 836 des Anmelders bekannt. Die dort beschriebenen Elemente weisen den Vorteil auf, daß man mit ihnen zum Beispiel paarweise Behälter miteinander verbinden kann, so daß man z.B. zwei Fahrradtaschen zum Transport ohne das Fahrrad zu einem einzigen kofferartigen Behälter verbinden kann, so daß demgemäß der Benutzer eine Hand frei behält.

Die bekannten Verbindungselemente weisen aber für den Einsatz unter Last unter anderem den Nachteil auf, daß die Halteflächen der Haken unterschiedlich ausgestaltet sind, um diese Verbindbarkeit zu erhalten. Dies vermindert die Lastaufnahme und führt zum Einsatz großvolumigerer Verbindungselemente.

Ausgehend von diesem Stand der Technik liegt der Erfindung die Aufgabe zugrunde, Verbindungselemente der eingangs genannten Art anzugeben, die es in einfacherer Weise gestatten, daß mit solchen Verbindungselementen versehene Behälter einfacher zusammengesetzt, transportiert und wieder getrennt werden können.

Die genannte Aufgabe wird erfindungsgemäß mit einem Verbindungselement gemäß dem Oberbegriff des Anspruchs 1 dadurch gelöst, daß der L-förmige Haken im Bereich des Hakenbogens eine seitliche Ausnehmung aufweist.

Dadurch, daß dem Haken im Hakenbogen Material entnommen worden ist, können zwei identische Haken, die an zwei gegenüberliegenden Gegenständen, wie zum Beispiel an den genannten Fahrradtaschen, befestigt sind, ineinander geschoben werden, wobei bei einem Anheben der Gegenstände die Last dann jeweils im wesentlichen auf der Hälfte von jedem der beiden Hakenbogen ruht.

Bei einer vorteilhaften Ausführungsform ist im Bogen des L-förmigen Hakens und im Grundkörper eine längliche Öffnung vorgesehen, in der ein Sperriegel einsetzbar ist. Dieser ist an einer horizontalen Achse des L-förmigen Hakens angelenkt, wobei der Sperriegel gegen die Kraft einer auf der Achse vorgesehenen Feder in den Raum zwischen dem Haken und dem Grundkörper einschwenkbar ist. Darüber hinaus ist der Haken nicht notwendigerweise aber vorzugsweise mit einer Öffnung versehen, die im Hakenkörper in dem unter der Ausnehmung befindlichen Abschnitt vorgesehen ist, deren Form und Größe insbesondere zur Aufnahme des Sperriegels eines zweiten Verbindungselementes ausgestaltet ist.

Die Anwendungsmöglichkeiten für einen solchen Haken sind vielfältig. Es können damit Verschlüsse für Jacken und Mäntel geschaffen werden, die auf Grund der Symmetrie der beiden Verbindungselemente in einfacher Weise einsetzbar und zudem formschön sind. Diese Verbindungselemente können für Planen von Verdecken von Lastkraftwagen eingesetzt werden. Die Haken können auch für Schuhschnallen und ähnliches Verwendung finden.

Bei einer Ausführungsform, bei der das Verbindungselement mit seinem Grundkörper in einem Gegenstand integriert ist, kann das Verbindungselement in einer Vielzahl von Anwendungen eingesetzt werden. Eine Möglichkeit betrifft den Einsatz und Transport von Getränkekisten. Bei Produkten, bei denen der Hersteller eines Produktes eine Stapelbarkeit fordert, verfügt der in dem Gegenstand integrierte Grundkörper über eine Öffnung, durch die der Haken eines zweiten Verbindungselementes hindurchführbar ist, wobei vorteilhafterweise, damit keinerlei Hakenelemente über eine Palette hinausstehen, an den den Verbindungselementen gegenüberliegenden Seiten eine entsprechende Anzahl weiterer Ausnehmungen vorgesehen, in die die Verbindungselemente eines zweiten gleichartigen Gegenstandes ein- und durchführbar sind. Somit kann eine Palettenschicht von Gegenständen, insbesondere Getränkekisten erreicht werden, ohne daß ein einziges Element über den seitlichen Rand der Kisten hinausschaut.

In kleinerer Ausführung der integrierten Verbindungselemente können auch Steckkarten und andere Computerelemente mit diesen Verbindungselementen versehen werden.

Eine weitere Anwendungsmöglichkeit, die insgesamt hier nicht abschließend aufgezählt sind, liegt in der Verbindung von Einzelstühlen zu einer Stuhlreihe, wobei die Verbindungselemente jeweils seitlich an beiden Seiten eines Stuhls vorgesehen sind.

Ein weiterer Vorteil der Verbindungselemente liegt darin, daß sie neben der Verbindung untereinander ebenfalls das Einhängen eines mit ihnen befestigten Gegenstandes an einer Stange, einem Rohr oder einem ähnlichen länglichen oder flächenartigen Element ermöglichen. Dabei kann es sich beispielsweise um den Rahmen einer Gepäckablage, einem Fahrradträger oder einen Handlauf handeln.

Weitere vorteilhafte Ausführungsformen sind in den Unteransprüchen gekennzeichnet.

Nachfolgend werden Ausführungsbeispiele der Erfindung anhand der Zeichnungen beispielhaft näher erläutert. Es zeigen:
- Fig. 1: eine perspektivische Ansicht eines Verbindungselementes gemäß einem ersten Ausführungsbeispiel der Erfindung,
- Fig. 2: eine perspektivische Ansicht eines Sperriegels zum Einsatz für ein Verbindungselement gemäß Fig. 1,
- Fig. 3 u. Fig. 4: ein ergänzendes Paar von Verbindungselementen zum Einsatz zusammen mit Verbindungselementen nach Fig. 1 bei einem Behälterset,
- Fig. 5: eine perspektivische, schematische Ansicht eines oben offenen Behältnisses mit Verbindungselementen gemäß einem zweiten Ausführungsbeispiel der Erfindung und
- Fig. 6: eine perspektivische, schematische Ansicht eines oben offenen Behältnisses mit Verbindungselementen gemäß einem dritten Ausführungsbeispiel der Erfindung.

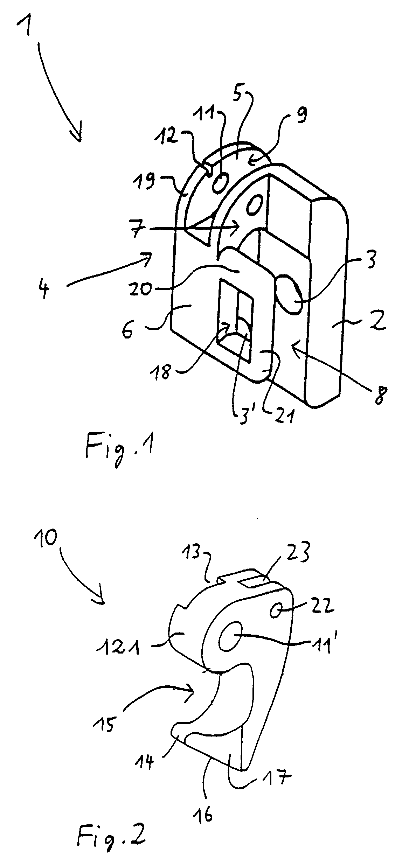

Die Fig. 1 zeigt eine perspektivische Ansicht eines Verbindungselementes 1 gemäß einem ersten Ausführungsbeispiel der Erfindung. Das Verbindungselement 1 ist zur lösbaren Verbindung von zwei Gegenständen miteinander vorgesehen. Hierfür weist es einen flachen Grundkörper 2 auf, in dem hier zwei Bohrungen 3 und 3' vorgesehen sind. Durch diese Bohrungen 3 und 3', die innengewindet sein können, werden Schrauben, Nägel oder andere stiftförmige Elemente hindurchgesteckt, um den Grundkörper 2 mit einem Gegenstand zu verbinden. Bei einem solchen Gegenstand kann es sich, wie in der Einleitung ausgeführt, um eine Rucksacktasche, um einen Fahrradkoffer, ganz allgemein um einen Behälter, um eine Steckwand für technische Geräte oder auch um eine übliche Wand handeln. Anstelle der Bohrungen 3 und 3' kann der Grundkörper 2 auch in einer anderen Weise mit einem Gegenstand verbunden werden, wobei insbesondere eine Klebung, eine Lötverbindung oder eine getackerte Verbindung in Frage kommen.

An diesem Grundkörper 2 ist ein im wesentlichen L-förmiger Haken 4 mit einem Hakenbogen 5 und einem im wesentlichen parallel zum Grundkörper 2 verlaufenden Hakenkörper 6 vorgesehen. Dabei verfügt der L-förmige Haken 4 im Bereich des Hakenbogens 5 über eine seitliche Ausnehmung 7. Es verbleibt damit im Hakenkörper 6 ein seitlicher Abschnitt 20, der ohne eine direkte Bogenverbindung mit dem Grundkörper 2 verbunden ist. Zu dem in der Seitenansicht bereits L-förmigen Haken 4 tritt in der Vorderansicht die L-Förmigkeit des Hakens 4 durch die Verbindung des Abschnittes 20 und dem verbleibenden Hakenbogen 5 über den hier linken unteren Abschnitt des Hakens 4.

Die Wirkungsweise eines solchen Verbindungselementes, das bereits sämtliche notwendigen funktionellen Merkmale aufweist, ist mit den Anwendungsbeispielen und im Zusammenhang mit den weiteren Zeichnungen erläutert.

Insbesondere wird es klar werden, daß zwei identische Verbindungselemente 1 verwendet werden können, um zwei Gegenstände miteinander zu verbinden. Es fügt sich nämlich bei einem Gegenüberstellen der Gegenstände und einem Ineinanderschieben der Verbindungselemente 1 jeweils von beiden Verbindungselementen 1 der Hakenkörper 6 mit seinem Abschnitt 20 in den zwischen Hakenkörper 6 und Grundkörper 2 bestehenden Schlitz 8, wobei jeder Hakenkörper 6 mit seinem Abschnitt unter den Hakenbogen 5 des anderen Verbindungselementes 1 untergreift. Die Dicke der Verbindung insgesamt entspricht der Dicke eines über den Grundkörper 2 hinausstehenden Haken 4 der Verbindungselemente 1.

Üblicherweise werden Gegenstände etwas breiterer Art mit mindestens zwei Haken gehoben, um zum einen den ansonsten einzelnen Haken nicht zu sehr zu belasten und um zum anderen das Auftreten von großen Kräften, die zu Verkippungen der beiden Elemente gegeneinander führen könnten, zu vermeiden. Vorteilhafterweise entspricht die Breite der Ausnehmung 7 im wesentlichen der Hälfte der Breite des Hakenkörpers 6. Insbesondere läßt sich dann aus Fig. 1 erkennen, daß bei einem Halten oder Anheben eines Gegenstandes mit zwei Verbindungselementen 1 jeweils die Hälfte des Hakenbogens 5 als Unterstützungsfläche zur Verfügung steht.

Neben dem reinen Aufhängen oder Heben eines Gegenstandes ist es in vielen Anwendungsfällen von Interesse, einen Schutz gegen unbeabsichtigtes Lösen eines Gegenstandes von einem anderen Element zu haben, wie zum Beispiel die Sicherung einer Fahrradtasche gegenüber einem Gepäckträger, eines Rucksackteiles eines aus zwei Hälften aufgebauten Rucksackes gegenüber dem anderen, eines an einem Verbindungselement befestigten Seiles oder Gurtes gegenüber einem Rohr oder einer Stange oder generell einfach von zwei Verbindungselementen 1 gegeneinander.

Dafür ist bei dem in der Fig. 1 dargestellten Ausführungsbeispiel im Bogen 5 des L-förmigen Hakens 4 und im Grundkörper 2 eine längliche Öffnung 9 vorgesehen, in der ein Sperriegel 10 einsetzbar ist, der in der Fig. 2 dargestellt ist. Zur drehbaren Befestigung des Sperriegels 10 ist in dem Hakenbogen 5 des Verbindungselementes 1 nach Fig. 1 eine horizontale Bohrung 11 und eine Nut 12 vorgesehen.

In die Bohrungen 11 wird ein in den Zeichnungen nicht dargestellter Stift eingesteckt, der sich ebenfalls durch eine Bohrung 11' im Sperriegel 10 erstreckt. Im Kopf 121 des Sperriegels 10 ist weiterhin eine seitliche Ausnehmung 13. Damit kann eine Feder auf den Stift aufgeschoben werden, die sich einerseits gegenüber einer Kante der Ausnehmung 13 und andererseits gegenüber der Nut 12 abstützen kann. Natürlich kann sich die Feder anstelle in der Nut 12 auch in einer in der Seitenwand des Hakenbogens 5 vorgesehenen kleinen Bohrung abstützen.

Dabei ist der Sperriegel 10 an einer horizontalen Achse des L-förmigen Hakens 4 angelenkt, wobei der Sperriegel 10 gegen die Kraft einer auf der Achse vorgesehenen Feder in den Schlitz 8 zwischen dem Haken 4 und dem Grundkörper 2 einschwenkbar ist.

In der Ruhestellung des Sperriegels 10 nimmt dieser eine in der Fig. 2 vergleichbare Stellung ein, d.h. seine Spitze 14 ruht vorteilhafterweise gegen die innere Wand des Hakenkörpers 6. Dabei umgreift der Hohlraum 15 des Sperriegels 10 ein Rohr oder einen anderen länglichen Gegenstand, der einem zweiten Verbindungselement zugeordnet ist oder dieses bildet.

Die untere schräge Kante 16 erlaubt in üblicher Weise das Einschieben eines solchen Verbindungselementes von unten. Besonders vorteilhaft ist der Sperriegel 10 allerdings durch die Tatsache, daß auf der der Ausnehmung 7 zugewandten Seite eine zweite schräge Fläche 17 vorgesehen ist, die den breiten Sperriegel 10 zu seiner Spitze 14 hin verjüngend zulaufen läßt. Damit wird erreicht, daß das seitliche Einschieben eines zweiten Verbindungselementes ebenfalls möglich ist, wie es nun im Zusammenhang mit der Fig. 1 weiter beschrieben wird.

Bei einem schon angesprochenen Einsatz zweier identischer Verbindungselemente 1 kann auch die Verwendung von Sperriegeln 10 wünschenswert sein. Damit wird es dann möglich, z.B. zwei Gepäcktaschen getrennt und mit Sperriegeln 10 sicher an einem Fahrrad zu befestigen und diese bei einer anderen Nutzungsart zu einer einzigen Tasche zusammenzusetzen. Hierfür verfügt der Hakenkörper 6 in dem unter der Ausnehmung 7 befindlichen Abschnitt über eine Öffnung 18, deren Form und Größe insbesondere zur Aufnahme des Sperriegel 10 eines zweiten Verbindungselementes 1 ausgestaltet ist. Dies führt dazu, daß die beiden Stege 19 des Hakenbogens 5 ungefähr die gleiche Dicke wie die seitlichen Randbereiche des unter der Ausnehmung 7 befindlichen Abschnittes 20 aufweisen.

Wird nun ein Verbindungselement 1 gegen ein anderes Verbindungselement 1 ineinander verschoben, so stoßen jeweils beide seitlichen Stege 21 jedes Verbindungselementes 1 gegen die seitliche schräge Fläche 17. Damit drückt der Benutzer mit der seitlichen Verschiebung der Verbindungselemente 1 ineinander beide Sperriegel 10 zurück, die gegen die Federkraft in die Ausnehmung 9 im Grundkörper zurückweichen und anschließend in die Öffnung 18 einrasten. Somit sind die beiden Gegenstände sicher miteinander verbunden. Zur Lösung der Verbindung ist im Sperriegel 10 entsprechend Fig. 2 eine weitere parallel zur Bohrung 11' verlaufende Bohrung 22 und eine über die Bohrung 22 greifende Nut 23' vorgesehen, an der ein Zugelement befestigbar ist, mit dem der Sperriegel 10 aus dem Eingriff zurückgezogen werden kann, so daß die beiden Gegenstände trennbar sind.

Ein Anwendungsfall für solche Verbindungselemente sind Behältersets im Allgemeinen. Dies können Rucksäcke, Fahrradtaschen, Musterkoffer oder ähnliches sein. Vorteilhafterweise sind diese dann zwar an einem Träger, wie einem Gepäckträger oder einem Rohr nur mit den vorzugsweise zwei oberen Verbindungselementen 1 eingehängt und befestigt. Aber spätestens nach einem Zusammenbau der beiden Behälter ist es sinnvoll und nützlich, daß die Behälter auch im unteren Bereich miteinander verbunden sind.

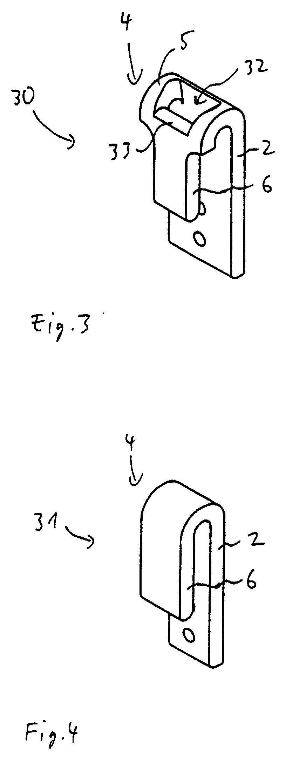

Dafür sind ein ergänzendes Paar von Verbindungselementen 30, 31 zum Einsatz zusammen mit Verbindungselementen 1 nach Fig. 1 bei einem Behälterset vorgesehen. An einem der Behälter des Behältersets sind einer oder zwei der Haken 30 nach Fig. 3 angebracht, an dem anderen Behälter des Behältersets sind dieselbe Anzahl von Haken 31 nach Fig. 4 vorgesehen.

Das Verbindungselement 30 verfügt über einen Grundkörper 2 und einen schmaleren Hakenkörper 6. Der Grundkörper 2 ist mit dem schmaleren Hakenkörper 6 über einen Hakenbogen 5 verbunden, der über eine mittige Öffnung 32 verfügt, die eine zum Hakenkörper 6 hingewandte Absetzkante 33 aufweist, auf der die Unterkante des Hakens 31 ruhen kann, so daß die Oberseite der Haken einander gegenüber die gleiche Höhe an den Behältern aufweisen.

Das komplementäre Verbindungselement 31 nach Fig. 4 ist ein einfacher L-förmiger Haken 4, der sich mit dem Grundkörper 6 zu einem "U" ergänzt. Das komplementäre Verbindungselement 31 ist nur so breit ausgestaltet, daß dessen Hakenkörper 6 durch die Öffnung 32 hindurchgeführt werden kann.

Die Funktion dieser Zusatzelemente 30 und 31 in Verbindung mit den Verbindungselementen nach Fig. 1 ist bei ihrem Einsatz für zwei zu verbindende Gegenstände wie z.B. Behältern wie folgt. Zuerst werden die Unterkanten der Gegenstände so aneinander gesetzt, daß die Unterkanten der Hakenkörper 6 der komplementären Verbindungselemente 31 an der Öffnung 32 der Verbindungselemente 30 stehen, dann werden die Gegenstände in einer vertikalen Relativbewegung zueinander verschoben, so daß sich die Verbindungselemente 30 und 31 ineinanderschieben. Dabei werden die Verbindungselemente 1 an den Gegenständen nicht oder eventuell nur insoweit beachtet, als daß - unter Bezugnahme auf die Fig. 1 - sich die beiden Ausnehmungen 7 der zu verbindenden Verbindungselemente 1 benachbart gegenüberstehen. Durch die Verbindung der unteren Zusatzelemente 30 und 31 ist die vertikale Höhe der Verbindungselemente 1 mit etwas Spiel im wesentlichen vorgegeben, so daß es nun für den Benutzer ein einfaches ist, die beiden Gegenstände im wesentlichen horizontal gegeneinander zu verschieben und so die jeweils zugeordneten Verbindungselemente 1 ineinander zu verschieben, wobei in der beschriebenen Weise die Sperriegel 10 weggedrückt werden und anschließend in die Öffnungen 18 einrasten.

Der Begriff "Gegenstand" im Plural, wie er in den Ansprüchen verwendet wird, umfaßt dabei in seinem Merkmal des Schaffens einer lösbaren Verbindung von zwei Gegenständen, zum einen den Gegenstand, an dem ein Verbindungselement befestigt ist oder wobei das Verbindungselement einstückig mit dem Gegenstand hergestellt ist, und zum anderen den isolierten (zweiten) Gegenstand, an dem ein erster Gegenstand, der mit einem Verbindungselement ausgestattet ist, lösbar befestigt wird. Damit umfaßt der Begriff des Gegenstandes sowohl einen transportablen Behälter als auch eine Wand, eine Stange, ein Rohr oder einen, isoliert gesehen, festen Fahrradträger, insbesondere auch ohne ein (zweites) Verbindungselement.

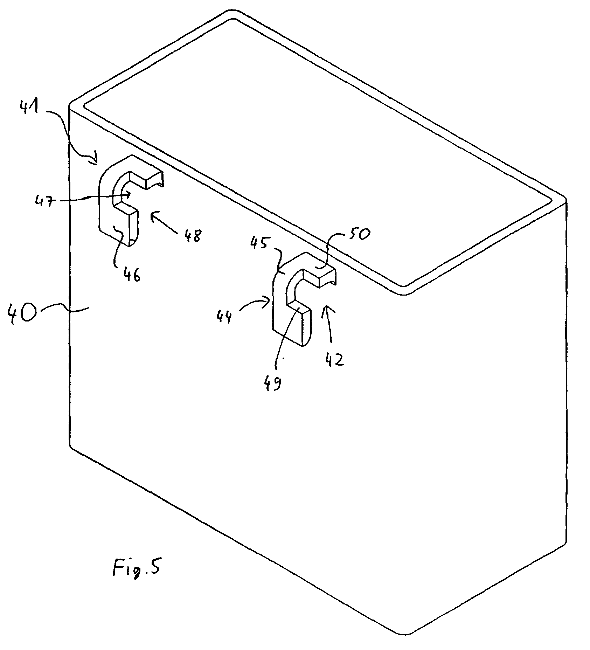

Die Fig. 5 zeigt eine perspektivische, schematische Ansicht eines oben offenen Behältnisses 40 mit Verbindungselementen gemäß einem zweiten Ausführungsbeispiel der Erfindung. Die sehr vereinfachte Zeichnung ist auf eine ganze Reihe von Behältnissen 40 anwendbar, z.B. auf Fahrradseitenkörbe oder Getränkekisten. Bei letzteren entspricht die Zeichnung der Darstellung einer 6x-1-Liter-Flaschen-Pfandkiste, bei der jeweils drei Flaschen in zwei Reihen in dem Behältnis 40 stehen.

Die Komponenten der Verbindungselemente nach diesem Ausführungsbeispiel sind mit Bezugszeichen ab 41 versehen, wobei auf eine Konkordanz zu den Bezeichnungen der Fig. 1 geachtet worden ist. Das Verbindungselement 41 verfügt über einen Hakenkörper 46, der über einen Hakenbogen 45 in das Behältnis 40 übergeht. Damit ist der Grundkörper 42 des Verbindungselementes 41 in das Behältnis 40 integriert. Wie bei der Ausgestaltung des Verbindungselementes 1 nach Fig. 1 ist eine seitliche Ausnehmung 47 und ein Schlitz 48 zwischen Behältnis 40 und Hakenkörper 46 vorhanden. Um einen ausreichenden Platz in der Breite des Schlitzes 48 für den unterzuschiebenden Hakenabschnitt 49 zu haben, ist am Hakenbogen 45 ein Steg 50 vorgesehen, der an dem Behältnis 40 befestigt ist. Dieser kann in anderen Ausführungsformen verkleinert oder bei entsprechender Auslegung des Hakenbogens 45 auch wegfallen.

In der Funktion können hier einerseits zwei Behältnisse 40 seitlich aneinander geschoben werden, um eine Verbindung zu bewirken, so daß man die Behältnisse an einem Griff tragen kann und andererseits kann jedes Behältnis 40 einzeln an einem anderen Gegenstand wie einer Stange oder dergleichen über den Schlitz 48 eingehängt werden.

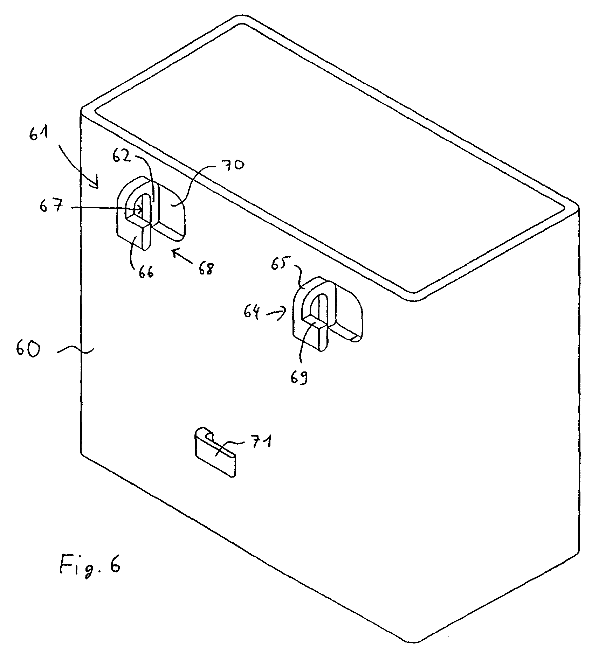

Die Fig. 6 zeigt ein weiteres Ausführungsbeispiel der Erfindung in einer perspektivischen, schematischen Ansicht eines anderen oben offenen Behältnisses mit erfindungsgemäßen Verbindungselementen.

Die Komponenten der Verbindungselemente nach diesem Ausführungsbeispiel sind mit Bezugszeichen ab 61 versehen, wobei auf eine Konkordanz zu den Bezeichnungen der Fig. 1 und 5 geachtet worden ist. Das Verbindungselement 61 verfügt über einen Hakenkörper 66, der über einen Hakenbogen 65 in das Behältnis 60 übergeht. Damit ist der Grundkörper 62 des Verbindungselementes 61 in das Behältnis 60 integriert. Wie bei der Ausgestaltung des Verbindungselementes 1 nach Fig. 1 ist eine seitliche Ausnehmung 67 und ein Schlitz 68 zwischen Behältnis 60 und Hakenkörper 66 vorhanden. Zusätzlich ist in dem im Behältnis 60 integrierten Grundkörper 62 eine Öffnung 70 vorgesehen, wobei deren Breite die Breite des Hakenkörpers 66 etwas übersteigt, womit beim Ineinanderschieben von zwei Behältnissen 60 der Haken 64 mit Hakenbogen 65 und Hakenkörper 66 durch die Öffnung eingeführt werden kann. Dabei wird der Hakenkörper 66 soweit vorgeschoben, bis er gegen den Hakenkörper 66 des zugeordneten Verbindungselementes 61 stößt.

Schließlich ist ein unterer Querhaken 71 vorgesehen, der auch eine Verbindung des unteren Abschnitts der Behältnisse 61 vorsieht. Diesem gegenüber steht dann eine Öffnung in einem zweiten Behältnis 60. Allerdings hat diese dargestellte Lösung den Nachteil, daß nicht alle Behältnisse 60 identisch ausgestaltet werden können, so daß diese Behältnisse zwar paarweise zu verwendende Taschen sein können. Für die Verwendung von automatisch zu verarbeitenden Getränkekisten sollte dieser Haken 71 weggelassen werden.

Schließlich können die Behältnisse aus Fig. 6 natürlich weitere, dem Fachmann ersichtliche Gegenstände mit Verbindungselementen zusätzlich mit Sperriegeln versehen sein. Dabei kann in der einfachsten Ausführung ein federbetätigter Keil vorgesehen sein, dessen Keilfläche entsprechend den Flächen 16 und/oder 17 des Sperriegels 10 bei Ineinanderschieben der Behältnisse zurückgedrückt wird, bis er einschnappt. Dabei kann der Auslösehebel einstückig mit dem Behältnis, z.B. im Bereich einer Verstärkung des Behältnisses, geschaffen sein, den der Benutzer bei einem oben offenen Behältnis, wie z.B. einer Getränkekiste, beim Auseinanderziehen der Kistenhälften automatisch mitgreift und entsprechend zum Lösen der Verbindung betätigt.

Neben den beschriebenen Ausführungsbeispielen der Verbindungselemente und der Gegenstände mit Verbindungselementen, die vorzugsweise mit den Gegenständen integriert sind, sind natürlich auch weitere dem Fachmann geläufige Anwendungen umfaßt und insbesondere das Verbindungsset aus zwei Verbindungselementen 1, die zusammengesteckt eine flache Einheit bilden. Bei Bedarf werden sie getrennt und mit den Rückseiten aneinander verbunden und können dann z.B. verwendet werden, um auf der einen Seite einen mit einem Bügel versehenen Gegenstand einzuhaken und auf der anderen Seite diesen Gegenstand z.B. an dem Gepäckträger eines Fahrrades zu befestigen.

## Patentansprüche

1. Verbindungselement zur lösbaren Verbindung von zwei Gegenständen miteinander, mit einem Grundkörper (2, 42, 62), an dem ein im wesentlichen L-förmiger Haken (4, 44, 64) mit einem Hakenbogen (5, 45, 65) und einem im wesentlichen parallel zum Grundkörper (2, 42, 62) verlaufenden Hakenkörper (6, 46, 66) vorgesehen ist, **dadurch gekennzeichnet**, daß der L-förmige Haken (4, 44, 64) im Bereich des Hakenbogens (5, 45, 65) eine seitliche Ausnehmung (7, 47, 67) aufweist.

2. Verbindungselement nach Anspruch 1, dadurch gekennzeichnet, daß die Breite der Ausnehmung (7, 47, 67) im wesentlichen der Hälfte der Breite des Hakenkörpers (6, 46, 66) entspricht.

3. Verbindungselement nach Anspruch 1 oder Anspruch 2, dadurch gekennzeichnet, daß im Bogen (5) des L-förmigen Hakens (4) und im Grundkörper (2) eine längliche Öffnung (9) vorgesehen ist, in die ein Sperriegel (10) einsetzbar ist, der an einer horizontalen Achse (11, 11') des L-förmigen Hakens (4) angelenkt ist, wobei der Sperriegel (10) gegen die Kraft einer auf der Achse (11, 11') vorgesehenen Feder in den Raum (8) zwischen dem Hakenkörper (6) und dem Grundkörper (2) einschwenkbar ist.

4. Verbindungselement nach Anspruch 3, dadurch gekennzeichnet, daß der Hakenkörper (6) in dem unter der Ausnehmung (7) befindlichen Abschnitt (20) über eine Öffnung (18) verfügt, deren Form und Größe insbesondere zur Aufnahme des Sperrriegels (10) eines zweiten Verbindungselementes ausgestaltet sind.

5. Verbindungselement nach einem der Ansprüche 1 bis 4, dadurch gekennzeichnet, daß das Verbindungselement (41) mit seinem Grundkörper (2) in einem Gegenstand (40) integriert ist.

6. Verbindungselement nach einem der Ansprüche 1 bis 4, dadurch gekennzeichnet, daß das Verbindungselement (61) mit seinem Grundkörper (62) in einem Gegenstand (60) integriert ist und daß der in dem Gegenstand (60) integrierte Grundkörper (62) über eine Öffnung (70) verfügt, durch die der Haken (64) eines zweiten Verbindungselementes hindurchführbar ist.

## Claims

1. A connecting element for releasably connecting two objects together, with a main body (2, 42, 62) on which a substantially L-shaped hook (4, 44, 64) is provided with a hook limb (5, 45, 65) and a hook body (6, 46, 66) extending substantially parallel to the main body (2, 42, 62), characterised in that the L-shaped hook (4, 44, 64) has a lateral recess (7, 47, 67) in the area of the hook limb (5, 45, 65).

2. A connecting element according to claim 1, characterised in that the width of the recess (7, 47, 67) substantially corresponds to half the width of the hook body (6, 46, 66).

3. A connecting element according to claim 1 or claim 2, characterised in that an oblong opening (9) is provided in the bend (5) of the L-shaped hook (4) and in the main body (2), in which a locking latch (10) can be placed which is hinged on a horizontal axis (11, 11') of the L-shaped hook (4) wherein the locking latch (10) can be swung into the space (8) between the hook body (6) and the main body (2) against the force of a spring provided on the axis (11, 11').

4. A connecting element according to claim 3, characterised in that the hook body (6) has an opening (18) in the portion (20) beneath the recess (7), the form and size of which is configured especially to receive the locking latch (10) of a second connecting element.

5. A connecting element according to one of claims 1 to 4, characterised in that the connecting element (41) is integrated into an object (40) with its main body (2).

6. A connecting element according to one of claims 1 to 4, characterised in that the connecting element (61) is integrated into an object (60) with its main body (62) and that the main body (62) integrated into the object (60) has an opening (70) through which the hook (64) of a second connecting element can be guided.

## Revendications

1. Elément d'assemblage pour relier amoviblement deux objets l'un à l'autre, comportant un corps de base (2, 42, 62) sur lequel est prévu un crochet (4, 44, 64) de configuration sensiblement en L, comprenant un arceau d'accrochage (5, 45, 65) et un corps d'accrochage (6, 46, 66) s'étendant pour l'essentiel parallèlement au corps de base (2, 42, 62), caractérisé par le fait que le crochet (4, 44, 64) configuré en L présente un évidement latéral (7, 47, 67) dans la région de l'arceau d'accrochage (5, 45, 65).

2. Elément d'assemblage selon la revendication 1, caractérisé par le fait que la largeur de l'évidement (7, 47, 67) correspond, pour l'essentiel, à la moitié de la largeur du corps d'accrochage (6, 46, 66).

3. Elément d'assemblage selon la revendication 1 ou la revendication 2, caractérisé par le fait qu'il est prévu, dans le corps de base (2) et dans l'arceau (5) du crochet (4) configuré en L, une ouverture allongée (9) dans laquelle peut être inséré un verrou de blocage (10) articulé sur un axe horizontal (11, 11') dudit crochet (4) configuré en L, le verrou de blocage (10) pouvant pénétrer par pivotement, en s'opposant à la force d'un ressort prévu sur l'axe (11, 11'), dans l'espace (8) entre le corps d'accrochage (6) et le corps de base (2).

4. Elément d'assemblage selon la revendication 3, caractérisé par le fait que le corps d'accrochage (6) dispose, dans la région (20) située au-dessous de l'évidement (7), d'un orifice (18) dont la forme et la taille sont notamment conçues pour recevoir le verrou de blocage (10) d'un second élément d'assemblage.

5. Elément d'assemblage selon l'une des revendications 1 à 4, caractérisé par le fait que ledit élément d'assemblage (41) est intégré dans un objet (40) par son corps de base (2).

6. Elément d'assemblage selon l'une des revendications 1 à 4, caractérisé par le fait que ledit élément d'assemblage (61) est intégré dans un objet (60) par son corps de base (62) ; et par le fait que ledit corps de base (62), intégré dans l'objet (60), dispose d'un orifice (70) à travers lequel peut passer le crochet (64) d'un second élément d'assemblage.
